# NEUE EUROPÄISCHE PATENTSCHRIFT

(11) **EP 1 353 209 B2**
(45) Veröffentlichungstag und Bekanntmachung des Hinweises auf die Entscheidung über den Einspruch: **26.11.2014**
(45) Hinweis auf die Patenterteilung: 11.07.2007
(21) Anmeldenummer: 03013895.2
(22) Anmeldetag: 18.05.2000
(51) Int. Cl.: G02B 21/16

(54) **Optische Anordnung zur Unterdrückung von Falschlicht**
Optical arrangement for suppressing stray light
Dispositif optique pour supprimer de la lumière parasite

(30) Priorität: 19.05.1999 DE 19923822
(43) Veröffentlichungstag der Anmeldung: 15.10.2003
(62) Teilanmeldung aus: 00935059.6
(73) Patentinhaber: Carl Zeiss Microscopy GmbH, 07745 Jena (DE)
(72) Erfinder: Schmidt, Stefan / c/o Sebastian Schmidt, 99096 Erfurt (DE)

(56) Entgegenhaltungen:
- WO-A-96/18205
- WO-A1-00/16149
- DE-A- 3 742 806
- DE-A- 19 630 322
- US-A- 5 377 002
- US-A- 5 796 112

## Beschreibung

### Abb.1:

Die Erfindung betrifft vorzugsweise die Erfassung und Messung der Fluoreszenz einer dünnen, einige 100nm dicken Schicht (1a) von farbstoffmarkierten Molekülen auf einem Glassubstrat (2) Ziel ist es, die Fluoreszenzeffizienz in Abhängigkeit vom lateralen Ort in der Schicht (1a) quantitativ zu erfassen.

Ein Verfahren zur Erzeugung von Fluoreszenzbildern ist beispielsweise aus DE 37 42 806 A bekannt.

Damit die dünne, optisch aktive Schicht (1a) vor oder während der optischen Beobachtung chemischen Prozessen unterworfen werden kann liegt sie auf der Innenseite eines mit Flüssigkeit, zum Beispiel einer wässrigen Lösung, gefüllten Kanals (3).
Ein solcher Prozess ist beispielsweise die Einfärbung der Schicht (1a) mit einer Farbstofflösung.

Der Kanal (3) wird durch das Substrat und eine ausschnitthaft dargestellte Kanalrückwand (4) gebildet. Die Kanalrückwand (4) kann aus unterschiedlichen Materialien bestehen. Häufig wird Kunststoff verwendet, der bei Beleuchtung zur Fluoreszenz angeregt wird. Die Emission von der Kanalrückwand stört dann die optische Beobachtung.

Ebenfalls störend wirken sich die Rückreflektion beziehungsweise die Rückstreuung von Anregungslicht in das Objektiv (5) aus. Rückreflektion beziehungsweise Rückstreuung finden neben der Kanalrückwand auch an der Substratoberseite und der Substratunterseite statt.

Die Erfindung ist in den unabhängigen Ansprüchen wiedergegeben.

Bei dem beschriebenen Gerät erfolgt die Beobachtung und die Anregung mit einem Objektiv (5) durch das Glassubstrat (2) hindurch. Der optische Aufbau des Gerätes ist so ausgelegt, dass die Beobachtung durch störendes Licht nicht verfälscht wird. Insbesondere wird durch den optischen Aufbau des Gerätes verhindert, dass das oben beschriebene Fluoreszenzlicht der Kanalrückwand (4) oder gestreutes beziehungsweise zurückreflektiertes Anregungslicht auf die Detektorfläche (11a) des Gerätes fällt.

### Abb.2 und Abb.3:

Ein Objektiv (5) dient zum Fokussieren des kollimierten Anregungslichts auf die Probe (aktive Schicht (1a)). Das Objektiv (5) dient auch dazu das von der Probe emittierte Licht zu sammeln.
Eine Blendenanordnung (18) befindet sich in der Nähe der Pupillenebene (6). Die Blendenanordnung (18) beinhaltet einen Spiegel zur Einspiegelung des Anregungslichts.
Das Projektiv(7) bildet zusammen mit dem Objektiv(5) die Objektebene in die nachweisseitige Zwischenbildebene (8) ab. Eine Detektoroptik (9) dient zur homogenen Beleuchtung des Detektors (11) und eine Aufweitungsoptik (13) zum Aufweiten des Laserstrahls.
Das Scanobjektiv (15) überführt die Ablenkung des Laserstrahls in eine lineare Bewegung des Anregungsflecks
Die Tubusoptik (17) im Anregungskanal bildet zusammen mit dem Objektiv (5) die anregungsseitige Zwischenbildebene (16) in die Objektebene (1) ab.
Eine Autofokuseinheit ermöglicht das automatische Einrichten der dünnen ProbenSchicht (1a) in die Objektebene (1).

### Anregungsstrahlengang:

### (Abb.2 und Abb.3)

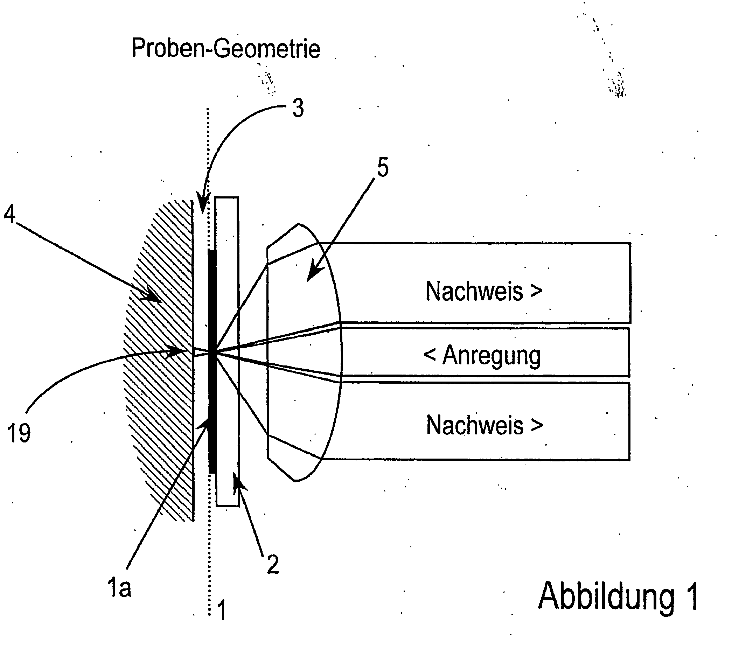

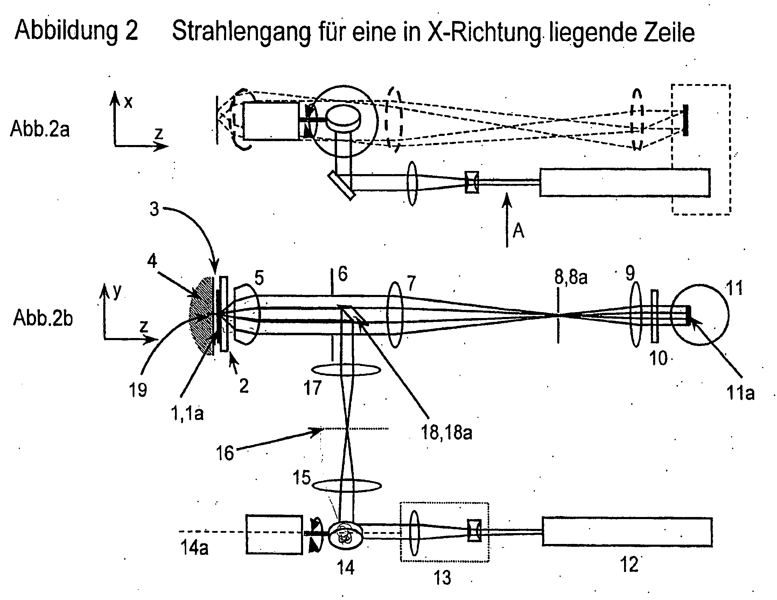

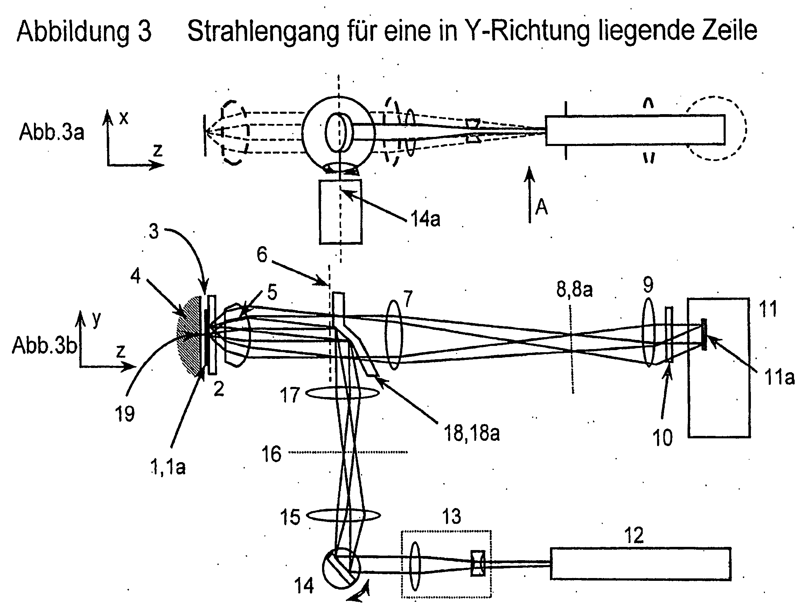

Abb. 2b, 3b sind Ansichten von Abb.2a,3a , jeweils in Richtung des Pfeiles A gesehen.
Als Lichtquelle dient ein Laser (12). Der Querschnitt des kollimierte Laserstrahls wird durch eine Aufweitungsoptik (13) vergrößert. Der aufgeweitet Strahl trifft auf den in der Pupille des Scanobjektivs (15) angebrachten Scanspiegel (14). Das Scanobjektiv (15) fokussiert das vom Scanspiegel (14) umgelenkte Licht in die anregungsseitige Zwischenbildebene (16). Aus der Zwischenbildebene (16) wird das Licht von der Tubusoptik (17) aufgenommen und kollimiert. Über einen Spiegel (18a) wird das Licht in das Objektiv (5) umgelenkt und von diesem in die Objektebene (1) fokussiert. In der Objektebene (1) entsteht auf diese Weise ein kleiner Anregungsfleck, der mit Hilfe des Scanspiegels (14) auf einer Linie hin und her bewegt werden kann.

Um einen für die gewünschte laterale Auflösung hinreichend kleinen Durchmesser (Durchmesser = 5µm) des Fokus zu erzeugen muss die ausgeleuchtete Apertur groß genug sein (NA=0,17). Der Strahlquerschnitt des Lasers muss also durch die Aufweitungsoptik (13) ausreichend vergrößert werden.

Um den Anregungsfleck in der Objektebene(1) auf einer geraden Linie zu bewegen wird der Scanspiegel (14) um die zur Ebene des einfallenden und reflektierten Strahls senkrechte Achse (14a, in Abb.2 parallel zur Z-Richtung, in Abb.3 parallel zur x-Richtung) gekippt.
Zusammen mit einer linearen Bewegung der Probe senkrecht zur Bewegung des Anregungsflecks (Zeile) kann die gesamte Probenfläche abgetastet werden.

Das Scanobjektiv (15) und die Tubusoptik müssen so aufeinander abgestimmt sein, dass sich der Beleuchtungstrahl immer vollständig durch die Pupille (6) des Objektivs tritt und stets vollständig auf den Spiegel (18a) fällt.
Objektiv (5), Tubusoptik (17) und Scanobjektiv (15) genügen zusammen der F-Theta-Bedingung. Das heißt der Zusammenhang zwischen dem Winkel des Scanspiegels (14) und dem Ort des Fokus in der Objektebene ist linear.

Die Einspiegelung des Anregungslichtes in das Objektiv(5) erfolgt durch einen Spiegel(18a), der an der Blendenanordnung (18) befestigt ist.

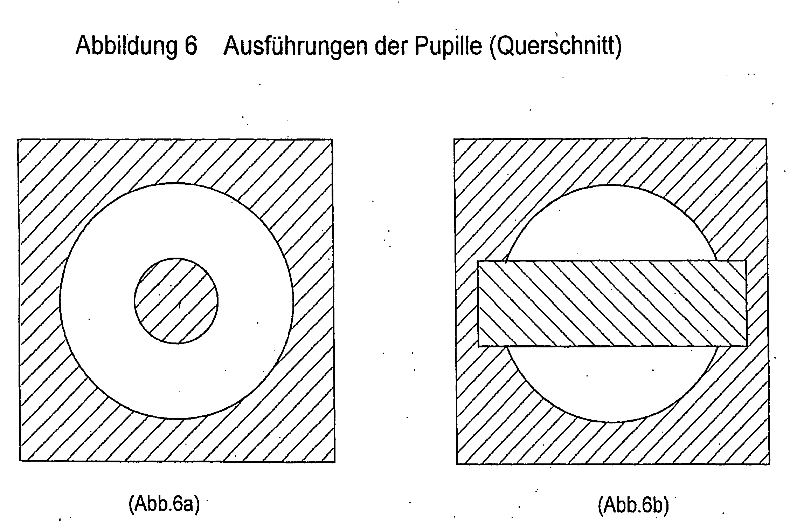

Durch die Fläche des Spiegels (18a) und der Blendenanordnung (18) wird nur ein Teil der Apertur des Objektivs (5) ausgeblendet, so dass das von der Probe emittierte Licht am Spiegel (18a) und der Blendenanordnung (18) vorbei in das Projektiv (7) gelangen kann (siehe Abb. 6) und so den Detektor erreicht.

An der Oberfläche des Substrats (2) und an der Grenzfläche des Substrats (2) zur Flüssigkeit im Kanal (3) wird der Anregungsstrahl reflektiert. Der Einfallswinkel des Anregungsstrahls ist so gewählt, dass die reflektierten Bündel durch die streifenförmige Blendenanordnung (18) oder den Spiegel selbst aus dem Nachweisstrahlengang ferngehalten werden.

### Abb.4:

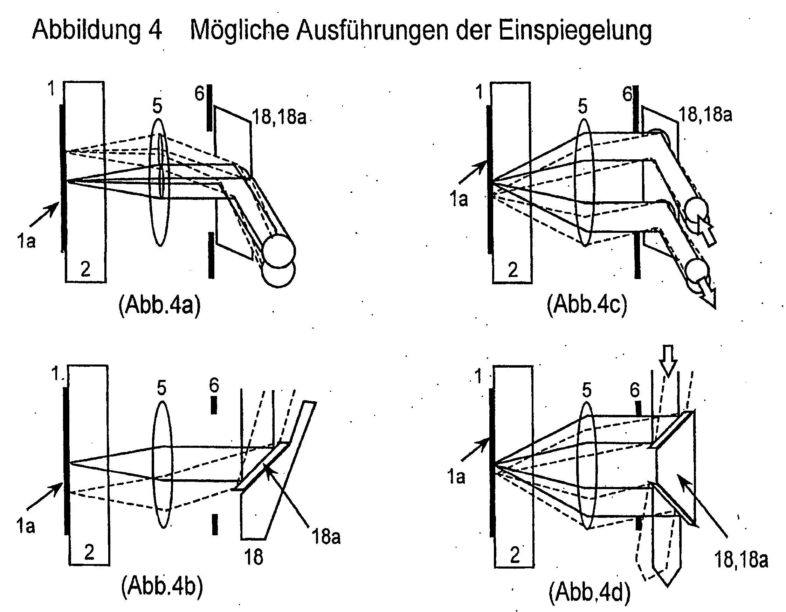

Mögliche Anordnungen der lichtundurchlässigen streifenförmigen Blende(18) und des von ihr gehaltenen Spiegels sind in den Abbildungen 4a-4d dargestellt. Abbildung 4a zeigt eine Anordnung für senkrechten telezentrischen Einfall des Anregungsstrahls auf die Probe, wobei die abgetastete Zeile in der gleichen Richtung wie der Anregungsstrahl (Y-Richtung) vor der Einspiegelung liegt. Abbildung 4b zeigt ähnlich zu Abb.3( 18,18a) eine Anordnung für senkrechten Einfall des Anregungsstrahls auf die Probe, wobei die abgetastete Zeile senkrecht (X-Richtung) zu der des Anregungsstrahl vor der Einspiegelung liegt. Die Abbildungen 4c und 4d zeigen Anordnungen mit schrägem Einfall des Anregungsstrahls auf die Probe mit Entkopplung von einfallendem und reflektiertem Strahl, wobei der Einfallswinkel so gewählt ist, dass die reflektierten Strahlen durch die streifenförmige Blende gestoppt, beziehungsweise aus dem Nachweisstrahlengang heraus reflektiert werden können.
Es besteht auch die Möglichkeit, die gesamten dargestellten Blenden als Spiegel auszubilden.

Das von der Substratoberfläche oder von der Grenzfläche zwischen Substrat und Flüssigkeit zurück reflektierte Anregungslicht kann, nachdem es aus dem Nachweisstrahlengang herausreflektiert wurde, auf einen Detektor gelenkt werden.
Die Leistung kann dann zu Referenz- oder Kalibrationszwecken gemessen werden.

### Nachweisstrahlengang:

### (Abb.2 und Abb.3)

Durch das Objektiv (5) und das Projektiv (7) im Nachweisstrahlengang wird die Objektebene (1) in die nachweisseitige Zwischenbildebene (8) abgebildet. Eine Spaltblende (8a) in der Zwischenbildebene (8) dient der Falschlichtunterdrückung. Eine Optik (9) vor dem Detektor (11) sorgt für eine homogene Beleuchtung der Detektorfläche (11a). Direkt vor dem Detektor befindet sich ein Bandpassfilter (10), der den nachzuweisenden Spektralbereich definiert.

Das von der aktiven Schicht (1a) ausgehende Fluoreszenzlicht wird durch das Objektiv (5) gesammelt und kollimiert.
In der Pupillenebene (6) des Objektivs wird aus dem kollimierten Bündel ein Streifen ausgeblendet. Der Streifen liegt parallel zu der Linie auf der sich der Anregungsfleck bewegt und verläuft durch das Zentrum der Pupille (6).

Die Ausblendung des Streifens und die Einspiegelung des Anregungslichtes bei einer optischen Anordnung zum abscannen einer Linie muss nicht notwendigerweise in Pupille des Objektivs liegen. Eine Bewegung des Strahlbündels in der Ebene in der eingespiegelt wird parallel zur Richtung des ausgeblendeten Streifens ist zulässig und beeinträchtigt die Wirkung der Ausblendung nicht.

Auf beiden Seiten des Streifens ist der Durchtritt durch die Pupille (6) frei, so das ein ausreichend großer Raumwinkel zur Detektion des Fluoreszenzlichts zur Verfügung steht.

Die Ausblendung eines Streifens hat zwei Funktionen:
a) Im Bereich der Ausblendung befindet sich die Einspiegelung (18) des Anregungslichts.
b) An der dem Substrat (2) mit der aktiven Schicht (1a) gegenüberliegenden Seite des Kanals (Kanalrückwand (4)) entsteht durch die Beleuchtung mit dem Anregungsstrahl Fluoreszenzlicht im nachzuweisenden Spektralbereich. Dieses Licht wird nicht durch den Bandpassfilter (10) vor dem Detektor (11) unterdrückt. Da die Quelle dieses Lichts aufgrund der defokussierten Anregung ausgedehnt ist und sie nicht in der Objektebene (1) liegt, wird der größte Teil dieser Emission durch die Spaltblende (8a) in der Zwischenbildebene (8) gestoppt. Durch den in ausgeblendeten Streifen entsteht für dieses Licht zusätzlich ein Schattenbereich, der über dem Spalt (8a) in der Zwischenbildebene (8) liegt. Fluoreszenzlicht von der Kanalrückwand (4) kann nur noch indirekt, über die Streuung an den Komponenten des Strahlengangs auf die Detektorfläche (11a) gelangen.

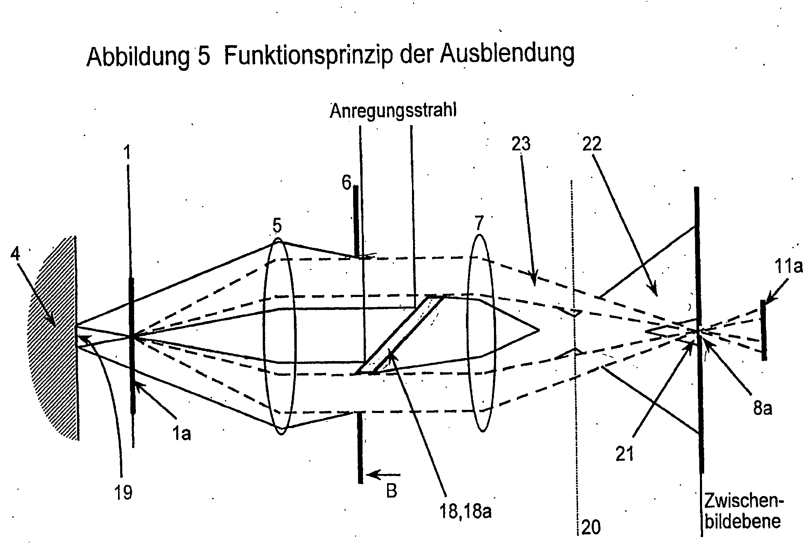

### Abb. 5 und 6: Funktionsprinzip der Ausblendung:

Die Abbildungen 5 und 6 illustrieren das Funktionsprinzip und zeigen mögliche Ausführungen der Blende.
Die Einspiegelung/ Ausblendung entspricht sinngemäß den in Abb.4a und 4b dargestellten Varianten.
Die Blickrichtung in Abb.4 entspricht einer Ansicht in Richtung des Pfeiles B in Abb.5.
Durch Ausblendungen entsteht für Licht, dessen Quelle räumlich beschränkt ist und die nicht in der Objektebene liegt ein Schattenbereich in der zur Objektebene konjugierten Bildebene. Der defokussierte Anregungsfleck (19) auf der Kanalrückwand (4) oder der Substratoberfläche ist eine solche Quelle für Falschlicht.

Idealerweise wird die Ausblendung (18) so groß gewählt, dass in der Bildebene (8) ein Kernschattenbereich (21) für das Falschlicht entsteht und die zum Anregungsfokus konfokale Blendenöffnung (8a) vollständig in diesem Kernschattenbereich (21) liegt. Falschlicht (22) aus dem Bereich des defokussierten Anregungsflecks in Ebenen, die hinreichend weit von der Objektebene entfernt sind kann dann nur noch indirekt durch Streuung an den Komponenten des Strahlengangs auf die Detektorfläche (11a) gelangen.
Im Gegensatz dazu passiert das Nutzlicht (23) aus dem Bereich des fokussierten Anregungsstrahls in der Objektebene (1) die konfokale Blendenöffnung (8a) ungehindert und gelangt auf die Detektorfläche (11a).

Um eine gute Ausblendung des Falschlichtes (22) zu erzielen muss der Kernschattenbereich (21) hinreichend groß, in jedem Fall größer als die Öffnung der konfokalen Blende sein.

Das heißt im Falle eines Pinholes muss die ausgeblendete Apertur größer als die Apertur des Anregungsstrahlengangs sein.

Wenn die konfokale Blende als Spalt ausgeführt ist, muss die ausgeblendete Apertur in der Ebene senkrecht zum Spalt größer als die Apertur des Anregungsstrahlengangs sein. In der Ebene parallel zum Spalt muss die volle Apertur abgedeckt werden.

Bei einer Spaltbreite die dem zehnfachen des beugungsbegrenzten Spots in der Bildebene entspricht, muss die ausgeblendete sagittale Apertur 5 -10% größer als die Apertur des Anregungsstrahlengangs sein.

### Abbildung 6 zeigt mögliche Formen der Ausblendung (18).

Abbildung 6a zeigt die Form der Ausblendung wenn sich das Bild des Anregungsflecks in der Bildebene (8) nicht bewegt. Das ist der Fall wenn die Probe nicht abgerastert werden soll oder wenn das Anregungslicht und das Nutzlicht durch den Scanspiegel (Abb.9 14) umgelenkt werden. In diesem Fall wird nur der zentrale Teil der Pupille ausgeblendet. Die konfokale Blende (8a) ist dann ein Pinhole.

Abbildung 6b zeigt wie Fig.5 die Form der Ausblendung wenn nur das Anregungslicht durch einen Scanspiegel (14) umgelenkt wird, der nur um eine Achse gekippt wird. Der ausgeblendete Streifen (18) muss parallel zu der Linie liegen, auf der der Anregungsfleck in der Objektebene hin und her läuft. Die Konfokale Blende (8a) ist dann als Spaltblende ausgeführt, deren Spalt ebenfalls parallel zur Bewegungsrichtung des Anregungsflecks in der Objektebene liegt.

## Patentansprüche

1. Optische Anordnung zur Unterdrückung von Falschlicht (22), das von einer beleuchteten Probe (1a) stammt, wobei die Beleuchtung der Probe (1a) und die Detektion des von der Probe (1a) emittierten Lichtes über ein Objektiv (5) erfolgt, wobei das von der Probe (1 a) emittierte Licht über eine Projektionsoptik (7) in Richtung der Detektion abgebildet wird, wobei im Strahlengang in Richtung des von der Probe (1a) emittierten Lichtes in der Pupillenebene (6) des Objektivs (5) eine Blendenanordnung (18,18a) vorgesehen ist, mit der durch Ausblendung oder Ausspiegelung in einem Teil des Strahlenganges in Richtung der Detektion ein Schattenbereich (21) für Falschlicht (22) in der Zwischenbildebene (8) der Projektionsoptik (7) erzeugt wird, in der eine Blende (8a) mit einer Blendenöffnung angeordnet ist, **dadurch gekennzeichnet, dass** ein zentraler Teil der Pupille ausgeblendet oder ausgespiegelt wird und der erzeugte Schattenbereich (21) über der Blendenöffnung in der Zwischenbildebene (8) liegt.

2. Anordnung nach Anspruch 1 oder 5, wobei die Blendenanordnung (18,18a) eine streifenförmige Blende umfasst.

3. Anordnung nach Anspruch 2, wobei in der Zwischenbildebene (8) der Projektionsoptik (7) eine Spaltblende angeordnet ist und der Spalt parallel zu der streifenförmigen Blende liegt.

4. Anordnung nach Anspruch 1 oder 5, wobei die Blende (8a) in der Zwischenbildebene (8) ein Pinhole ist.

5. Optische Anordnung zur Unterdrückung von Falschlicht (22), das von einer beleuchteten Probe (1a)stammt, wobei die Beleuchtung der Probe (1a) und die Detektion des von der Probe (1a) emittierten Lichtes über ein Objektiv (5) erfolgt, wobei das von der Probe (1 a) emittierte Licht über eine Projektionsoptik (7) in Richtung der Detektion abgebildet wird, wobei im Strahlengang in Richtung des von der Probe (1a) emittierten Lichtes in der Nähe der Pupillenebene (6) des Objektivs (5) eine Blendenanordnung (18,18a) vorgesehen ist, mit der durch Ausblendung oder Ausspiegelung in einem Teil des Strahlenganges in Richtung der Detektion ein Schattenbereich (21) für Falschlicht (22) in der Zwischenbildebene (8) der Projektionsoptik (7) erzeugt wird, in der eine Blende (8a) mit einer Blendenöffnung angeordnet ist, **dadurch gekennzeichnet, dass** ein zentraler Teil der Pupille ausgeblendet oder ausgespiegelt wird und der erzeugte Schattenbereich (21) über der Blendenöffnung (8a) in der Zwischenbildebene (8) liegt, wobei ein Kernschattenbereich (21) größer als die Blendenöffnung (8a) ist.

## Claims

1. Optical arrangement to suppress stray light (22) which emanates from an illuminated sample (1a), wherein the illumination of the sample (1a) and the detection of the light emitted by the sample (1a) are performed by an objective (5), wherein the light emitted by the sample (1a) is imaged by projection optics (7) in the direction of detection, wherein in the beam path in the direction of the light emitted by the sample (1 a) in the pupil plane (6) of the objective (5) there is provided a diaphragm arrangement (18, 18a), by means of which a shadow region (21) for stray light (22) is produced in the intermediate image plane (8) of the projection optics (7) by masking or by outwards reflection in a part of the beam path in the direction of detection, said projection optics having disposed therein a diaphragm (8a) with a diaphragm opening, **characterised in that** a central part of the pupil is masked or reflected out and the generated shadow region (21) lies above the diaphragm opening in the intermediate image plane (8).

2. Arrangement as claimed in claim 1, wherein the diaphragm arrangement (18, 18a) comprises a strip-like diaphragm.

3. Arrangement as claimed in claim 2, wherein a slit diaphragm is disposed in the intermediate image plane (8) of the projection optics (7) and the slit lies in parallel with the strip-like diaphragm.

4. Arrangement as claimed in claim 1, wherein the diaphragm (8a) in the intermediate image plane (8) is a pinhole.

5. Optical arrangement to suppress stray light (22) which emanates from an illuminated sample (1a), wherein the illumination of the sample (1a) and the detection of the light emitted by the sample (1a) are performed by an objective (5), wherein the light emitted by the sample (1a) is imaged by projection optics (7) in the direction of detection, wherein in the beam path in the direction of the light emitted by the sample (1 a) in the vicinity of the pupil plane (6) of the objective (5) there is provided a diaphragm arrangement (18, 18a), by means of which a shadow region (21) for stray light (22) is produced in the intermediate image plane (8) of the projection optics (7) by masking or by outwards reflection in a part of the beam path in the direction of detection, said projection optics having disposed therein a diaphragm (8a) with a diaphragm opening, **characterised in that** a central part of the pupil is masked or reflected out and the generated shadow region (21) lies above the diaphragm opening in the intermediate image plane (8), wherein a deepest-shadow region (21) is larger than the diaphragm opening (8a).

## Revendications

1. Dispositif optique pour supprimer de la lumière parasite (22) qui provient d'un échantillon (1a) illuminé, l'illumination de l'échantillon (1a) et la détection de la lumière émise par l'échantillon (1a) s'effectuant à l'aide d'un objectif (5), la lumière émise par l'échantillon (1a) étant reproduite par une optique de projection (7) dans la direction de la détection, dans la trajectoire des rayons, dans la direction de la lumière émise par l'échantillon (1a), dans la zone de la pupille (6) de l'objectif (5), étant prévu un système d'obturation (18, 18a) à l'aide duquel est créée, par masquage ou suppression de la réflexion, une zone d'ombre (21) pour la lumière parasite (22) dans une partie de la trajectoire des rayons d'excitation dans la direction de la détection, dans le plan de l'image intermédiaire (8) de l'optique de projection (7) dans laquelle est disposé un obturateur (8a) avec une ouverture d'obturation,
**caractérisé en ce qu'**une partie centrale de la pupille est masquée ou non réfléchie et que la zone d'ombre (21) créée se trouve au-dessus de l'ouverture de l'obturateur (8a) dans le plan image intermédiaire (8).

2. Dispositif selon la revendication 1, **caractérisé en ce que** le système d'obturation (18, 18a) comporte un obturateur en forme de fente.

3. Dispositif selon la revendication 2, **caractérisé en ce qu'**un obturateur à fente est disposé dans le plan image intermédiaire (8) de l'optique de projection (7) et que la fente est parallèle à l'obturateur en forme de fente.

4. Dispositif selon la revendication 1, **caractérisé en ce que** l'obturateur (8a) dans le plan image intermédiaire (8) est un sténopé.

5. Dispositif optique pour supprimer de la lumière parasite (22) qui provient d'un échantillon (1a) illuminé, l'illumination de l'échantillon (1a) et la détection de la lumière émise par l'échantillon (1a) s'effectuant à l'aide d'un objectif (5), la lumière émise par l'échantillon (1a) étant reproduite par une optique de projection (7) dans la direction de la détection, dans la trajectoire des rayons, dans la direction de la lumière émise par l'échantillon (1a), à proximité de la zone de la pupille (6) de l'objectif (5), étant prévu un système d'obturation (18, 18a) à l'aide duquel est créée, par masquage ou suppression de la réflexion, une zone d'ombre (21) pour la lumière parasite (22) dans une partie de la trajectoire des rayons d'excitation dans la direction de la détection, dans le plan de l'image intermédiaire (8) de l'optique de projection (7) dans laquelle est disposé un obturateur (8a) avec une ouverture d'obturation,
**caractérisé en ce qu'**une partie centrale de la pupille est masquée ou non réfléchie et que la zone d'ombre (21) créée se trouve au-dessus de l'ouverture de l'obturateur (8a) dans le plan image intermédiaire (8), une ombre absolue (21) étant plus grande que l'ouverture l'obturateur (8a).
